(19) Europäisches Patentamt / European Patent Office / Office européen des brevets

(11) **EP 2 692 055 B1**

(12) **FASCICULE DE BREVET EUROPEEN**

(45) Date de publication et mention de la délivrance du brevet:
**14.11.2018 Bulletin 2018/46**

(21) Numéro de dépôt: **12717418.3**

(22) Date de dépôt: **29.03.2012**

(51) Int Cl.:
*H02P 23/00* (2016.01)     *H02P 6/10* (2006.01)
*H02P 21/05* (2006.01)

(86) Numéro de dépôt international:
**PCT/FR2012/050673**

(87) Numéro de publication internationale:
**WO 2012/131269 (04.10.2012 Gazette 2012/40)**

(54) **SYSTEME ET PROCEDE DE COMMANDE D'UN MOTEUR ELECTRIQUE A PHASES MULTIPLES PRENANT EN COMPTE LES OSCILLATIONS DE COURANT**

SYSTEM UND VERFAHREN ZUR STEUERUNG EINES MEHRPHASEN-ELEKTROMOTORS UNTER BERÜCKSICHTIGUNG VON STROMSCHWINGUNGEN

SYSTEM AND METHOD FOR CONTROLLING A MULTIPHASE ELECTRIC MOTOR WHILE TAKING CURRENT OSCILLATIONS INTO ACCOUNT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2011 FR 1152652**

(43) Date de publication de la demande:
**05.02.2014 Bulletin 2014/06**

(73) Titulaire: **Renault S.A.S.**
**92100 Boulogne-Billancourt (FR)**

(72) Inventeur: **NGUYEN, Thanh**
**F-78470 St Remy Les Chevreuse (FR)**

(56) Documents cités:
**EP-A1- 1 906 523      EP-A2- 0 631 373**
**EP-A2- 1 263 125      EP-A2- 1 944 861**
**JP-A- 2002 223 582     US-A1- 2003 030 404**

**Description**

L'invention a pour domaine technique le contrôle des moteurs électriques, et plus particulièrement le contrôle de l'alimentation électrique de tels moteurs.

Les moteurs électriques ont connu un essor récent lié à la démocratisation des véhicules hybrides et aux avancées concernant la commercialisation de véhicules électriques. Toutefois les systèmes et procédés de commandes utilisés dans ces véhicules génèrent parfois des oscillations de courant sur le bus à haute tension continue reliant la batterie aux différents organes. Ces ondulations de courant ont un impact négatif sur la compatibilité électromagnétique de la boîte d'électronique de puissance, sur le chargeur de batterie et sur la précision de mesure de l'état de charge de la batterie. Certaines études montrent même un impact négatif sur la durée de vie de la batterie.

Ces ondulations de courant sur le bus continu haute tension ont aussi un impact négatif sur l'échauffement du condensateur en amont du convertisseur statique d'énergie et donc sur sa durée de vie.

Ces oscillations de courant sont issues des ondulations du couple du moteur et sont la source de bruits et vibrations acoustiques et solidiennes du groupe motopropulseur électrique. On rappelle que si les vibrations acoustiques sont dues à la propagation par l'air de vibrations mécaniques, les vibrations solidiennes sont dues à la propagation dans un solide de vibrations mécaniques.

Le document FR 2869478 décrit un moteur synchrone à faibles ondulations de couple ainsi que le procédé de commande d'un tel moteur. La minimisation des oscillations de couple est présentée dans le document comme permettant d'améliorer la qualité de l'effort mécanique créé.

Le document EP 1906523 divulgue le contrôle d'une machine électrique à enroulement de champs permettant la réduction d'oscillations du champ magnétique tournant associé au rotor, ainsi que les applications à un moteur électrique pour véhicule automobile

Le document JP-2002-223582 divulgue une correction d'ondulation de couple impliquant une correction de la consigne de couple en fonction de la mesure de couple.

Le document US2003-0030404 décrit un système de commande pour moteur électrique synchrone comprenant un inverseur alimenté en courant continu, le système de commande comprenant un filtre éliminant les composantes harmoniques supérieures de la mesure de courant continu.

Il existe ainsi un besoin de limiter les oscillations de couple du moteur à l'origine des bruits et vibrations acoustiques et solidiennes du groupe motopropulseur électrique d'un véhicule automobile.

Un but de l'invention est un système et un procédé de commande d'un groupe motopropulseur comprenant un moteur électrique synchrone capable de limiter les ondulations de courant en amont du convertisseur statique sur le bus à haute tension continue dues aux oscillations de couple du moteur à partir de mesures de puissance du moteur et du bus à haute tension.

Dans un mode de réalisation, on propose un système de commande d'un moteur électrique à phases multiples équipant un véhicule automobile. Ce moteur comprend un rotor alimenté par un hacheur de tension de rotor et un stator alimenté par un onduleur de tension à phases multiples. Le hacheur de tension et l'onduleur de tension à phases multiples sont alimentés par un bus à haute tension continue, le système de commande recevant en entrée une consigne de couple d'un calculateur de véhicule électrique.

Ce moteur synchrone peut aussi être composé d'un rotor à aimants permanents, l'invention étant aisément transposable à un tel moteur.

On propose donc aussi un système de commande d'un moteur électrique à phases multiples équipant un véhicule automobile. Ce moteur comprend un rotor à aimants permanents et un stator alimenté par un onduleur de tension à phases multiples. L'onduleur de tension à phases multiples est alimenté par un bus à haute tension continue, le système de commande recevant en entrée une consigne de couple d'un calculateur de véhicule électrique.

Le système de commande comprend un système de commande dynamique de la consigne de couple apte à déterminer une consigne de correction dynamique d'ondulation de couple fonction de la puissance mécanique estimée ou puissance électrique du moteur électrique, de la puissance du bus à haute tension continue et d'une mesure de vitesse de rotation du moteur, et
un moyen de détermination de consignes d'alimentation du moteur électrique comprenant des moyens de correction d'une consigne de couple en fonction de la consigne de couple et de la consigne de correction dynamique d'ondulation de couple, et une table de conversion apte à déterminer des consignes d'alimentation du moteur en fonction de la consigne de couple corrigée.

Grâce à ce système de commande, on peut éliminer les ondulations de courant du bus à haute tension continue, ce qui permet d'éliminer également les ondulations de couple du moteur. On améliore ainsi la prestation acoustique du moteur électrique.

Le système de commande dynamique de la consigne de couple peut recevoir en entrée une valeur des pertes électriques au niveau du hacheur de tension et de l'onduleur de tension à phases multiples.

Le système de commande dynamique de la consigne de couple peut comprendre des moyens aptes à déterminer la somme de la puissance du moteur électrique et des pertes électriques au niveau du hacheur de tension et de l'onduleur de tension à phases multiples.

Le système de commande dynamique de la consigne de couple peut recevoir en entrée une valeur des pertes électriques au niveau du hacheur de tension et de l'onduleur de tension à phases multiples.

Le système de commande dynamique de la consigne de couple peut comprendre un filtre passe haut.

Le système de commande dynamique de la consigne de couple peut recevoir en entrée une estimation dynamique du couple et un couple de référence.

Selon un autre aspect de l'invention, on propose un procédé de commande d'un moteur électrique à phases multiples équipant un véhicule automobile alimenté par un hacheur de tension de rotor ou un rotor à aimants permanents et un stator alimenté par un onduleur de tension à phases multiples. Le hacheur de tension et l'onduleur de tension à phases multiples sont alimentés par un bus à haute tension continue. L'alimentation du moteur est déterminée en fonction de la consigne de couple dépendant de la requête du conducteur. Le procédé de commande comprend une détermination d'une consigne de correction dynamique d'ondulation de couple fonction de la puissance mécanique estimée ou puissance électrique du moteur électrique, de la puissance du bus à haute tension continue et d'une mesure de vitesse de rotation du moteur, et une détermination de consignes d'alimentation du moteur dépendant de la consigne de correction dynamique d'ondulation de couple et de la consigne de couple, la consigne de couple corrigée permettant la détermination de l'alimentation du moteur, la détermination de consignes d'alimentation du moteur comprenant une correction d'une consigne de couple en fonction de la consigne de couple et de la consigne de correction dynamique d'ondulation de couple, et une détermination des consignes d'alimentation du moteur issues d'une cartographie en fonction de la consigne de couple corrigée.

Le procédé permet d'éliminer les ondulations de courant du bus à haute tension continue alimentant le hacheur de tension et l'onduleur. Le procédé permet ainsi d'éliminer les ondulations de couple du moteur et d'améliorer la prestation acoustique du moteur électrique.

D'autres buts, caractéristiques et avantages apparaîtront à la lecture de la description suivante donnée uniquement en tant qu'exemple non limitatif et faite en référence aux dessins annexés sur lesquels :

- la figure 1 illustre les principaux éléments d'un système de commande d'un moteur électrique 1 à trois phases selon l'état de la technique,
- la figure 2 illustre la structure élémentaire de commande de couple d'un moteur électrique,
- la figure 3 illustre les principaux éléments d'un système de commande d'un moteur électrique 1 triphasé selon l'invention,
- la figure 4 illustre la place du système de commande dynamique de la consigne de couple d'un moteur électrique dans le système de commande d'un moteur électrique triphasé,
- la figure 5 illustre les principaux éléments d'un système de commande dynamique selon un premier mode de réalisation,
- la figure 6 illustre les principaux éléments d'un système de commande dynamique selon un deuxième mode de réalisation,
- la figure 7 illustre les principaux éléments d'un autre mode réalisation du système de commande dynamique,
- la figure 8 illustre les principaux éléments d'une autre alternative de réalisation du système de commande dynamique,
- la figure 9 illustre les principaux éléments d'un système de commande dynamique selon un cinquième mode de réalisation,
- la figure 10 illustre les principaux éléments d'un système de commande dynamique selon un sixième mode de réalisation,
- la figure 11 illustre les principaux éléments d'un système de commande dynamique selon un septième mode de réalisation, et
- la figure 12 illustre les principaux éléments d'un système de commande dynamique selon un huitième mode de réalisation.

Un moteur électrique 1 comprend une partie mobile appelée rotor 2 et une partie fixe appelée stator 3. Le stator 3 et le rotor 2 sont généralement de forme circulaire, chacun comprenant des bobinages répartis sur leur périphérie. Lorsqu'il est alimenté, un bobinage génère un champ magnétique dont la polarité dépend du signe de la tension de polarisation. Les bobinages du stator 3 sont répartis en plusieurs phases alimentées indépendamment les unes des autres. Chaque phase est alimentée par une tension sinusoïdale déphasée par rapport aux tensions appliquées aux autres phases. Avec une synchronisation adaptée, il est possible de générer une succession de champs magnétiques présentant des polarités alternées.

Parallèlement, le rotor 2 est alimenté par un courant continu de sorte que les bobinages disposés sur sa périphérie génèrent des champs magnétiques constants. Les bobinages sont réalisés de sorte qu'il existe une succession de champs de polarités alternées.

Ainsi, lorsque le moteur électrique 1 est activé, le stator 3 crée des champs magnétiques attirant puis repoussant les champs magnétiques du rotor 2. Le rotor 2 est mis en rotation.

Lorsque le moteur électrique 1 est utilisé en tant que source d'énergie, par exemple pour créer de l'énergie électrique lors d'un freinage, c'est l'induction couplant le stator 3 au rotor 2 qui crée de l'énergie électrique. Le rotor 2 est alimenté par un courant continu afin de générer des champs magnétiques constants. Lorsqu'il est mis en rotation, les champs magnétiques du rotor 2 induisent un courant alternatif dans les bobinages du stator 3.

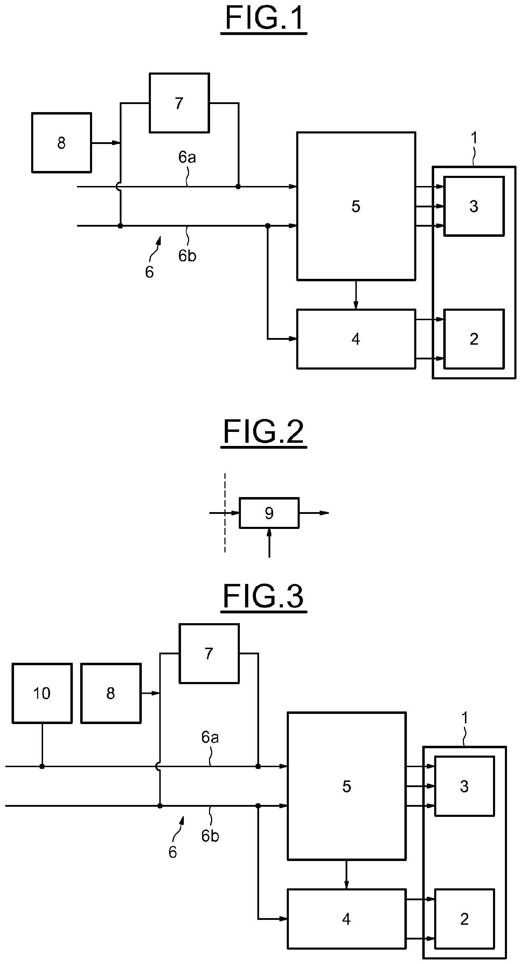

La figure 1 illustre les principaux éléments d'un système de commande d'un moteur électrique 1 à trois phases selon l'état de la technique. On peut y voir représenté les parties mobiles (rotor 2) et fixes (stator 3) d'un moteur électrique 1 triphasé, respectivement alimentées en énergie par un hacheur de tension 4 et un onduleur de tension triphasé 5. Le hacheur de tension 4 et l'onduleur de tension triphasé 5 sont eux-mêmes alimentés en énergie par un bus 6 à haute tension continue. Le bus 6 à haute tension continue comprend un conducteur de masse 6a et un conducteur de tension positive 6b. Le bus 6 à haute tension continue est connecté par ailleurs à la batterie du véhicule, par exemple une batterie lithium ion. Il est à noter qu'un condensateur de lissage 7 est disposé entre le conducteur de masse 6a et le conducteur de tension positive 6b afin d'amortir les variations de tension. Une armature du condensateur de lissage 7 est reliée en amont de la connexion entre le conducteur de tension positive 6b du bus 6 à haute tension continue, la connexion au hacheur de tension 4 et la connexion à l'onduleur de tension triphasé 5. Un capteur de tension 8 est relié à la masse et à un point situé entre le condensateur de lissage 7 et le conducteur de tension positive 6b du bus 6 à haute tension continue.

La figure 2 illustre la structure élémentaire de commande de couple d'un moteur électrique 1. Cette structure comprend une table de conversion 9 recevant en entrée la consigne de couple et émettant en sortie des consignes de courants de phase (Id_ref,Iq_ref) du stator 3 dans un repère tournant ainsi qu'une consigne de courant du rotor 2 (If_ref). Pour réaliser cette conversion, la table de conversion 9 prend également en compte la vitesse du véhicule et la tension en amont du condensateur de lissage 7 mesurée par le capteur de tension 8.

On rappelle qu'un moteur électrique 1 triphasé comprend un couple de valeurs de tension et de courant pour chaque phase, les fronts montant et descendant de la tension ou du courant d'une phase étant déphasés dans le temps par rapport à ceux d'une phase adjacente. Ce déphasage permet de générer des alternances de champs magnétiques attirant puis repoussant le rotor 2 afin de générer une rotation. Les valeurs de tension et de courant des phases du moteur exprimées dans un repère (x,y) fixe lié au stator 3 sont simplifiées en une seule paire de valeurs de courant et de tension dans un repère (d,q) tournant lié au rotor 2.

La figure 3 illustre les principaux éléments d'un système de commande d'un moteur électrique 1 triphasé selon l'invention.

Le système de commande illustré par la figure 3 se distingue de celui de illustré par la figure 1 par l'ajout d'un moyen de détermination 10 du courant du bus 6 à haute tension continue. Les autres éléments référencés sur la figure 3 correspondent aux éléments portant la même référence sur la figure 1. On se référera à la description illustrée par la figure 1 pour la description structurelle et fonctionnelle de ces éléments.

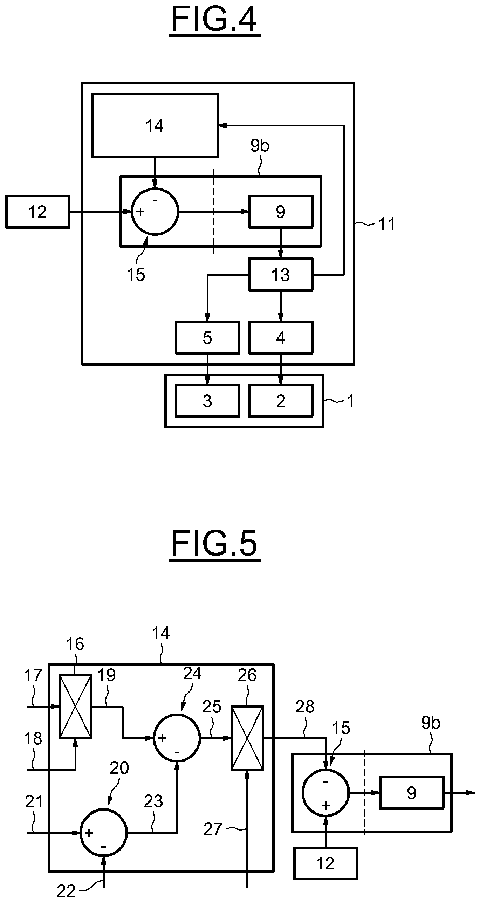

La figure 4 illustre la place du système de commande dynamique 14 de la consigne de couple d'un moteur électrique 1 dans le système de commande 11 d'un moteur électrique 1 triphasé, également appelé boîte d'électronique de puissance.

Le système de commande 11 d'un moteur électrique 1 triphasé est relié en entrée au calculateur de véhicule électrique 12 (EVC) et en sortie au rotor 4 et au stator 3 du moteur électrique 1. Le système de commande 11 reçoit du calculateur de véhicule électrique 12 une consigne de couple qui est transmise à la table de conversion 9 illustrée sur la figure 2 et comprise dans un moyen de détermination 9b de consignes d'alimentation du moteur. La table de conversion 9 émet en sortie des consignes de courants de phase (Id_ref,Iq_ref) du stator 3 dans un repère tournant ainsi qu'une consigne de courant du rotor 2 (If_ref) à destination du moyen de contrôle 13 du moteur électrique. Le moyen de contrôle 13 du moteur électrique émet alors des commandes à destination des inverseurs compris dans le hacheur de tension 4 et l'onduleur de tension triphasé 5. Ces derniers émettent alors des courants à destination du rotor 2 et du stator 3 du moteur électrique 1.

Le système de commande dynamique 14 de la consigne de couple d'un moteur électrique 1 est connecté en entrée au moyen de contrôle 13 du moteur électrique et à l'entrée du moyen de détermination 9b de consignes d'alimentation du moteur.

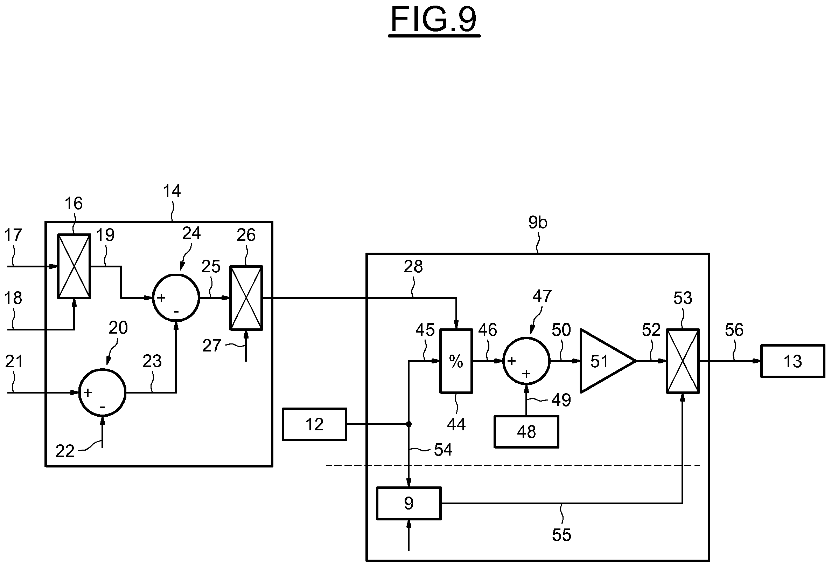

Le moyen de détermination 9b illustré sur la figure 4 se limite à un soustracteur 15 connecté en sortie à la table de conversion 9 et en entrée au calculateur de véhicule électrique 12 et au système de commande dynamique 14 de la consigne de couple. Toutefois, d'autres structures seront décrites plus loin en regard des figures 9 à 12.

Un procédé de commande dynamique de la consigne de couple d'un moteur électrique 1 associé au système de commande dynamique 14 comprend les étapes suivantes.

Le procédé de commande comprend la mesure de la tension et la mesure du courant du bus 6 à haute tension continue suivi du calcul de la puissance issu du produit du courant et de la tension du bus 6 à haute tension continue.

Le procédé se poursuit avec l'estimation des tensions statoriques du moteur ($V_q$,$V_d$) dans le repère tournant (d,q) et le calcul de la puissance électrique du moteur en fonction des courants de phase du moteur ($I_d,I_q$) et des tensions statoriques du moteur ($V_q,V_d$).

La puissance électrique du moteur est obtenue par application de l'équation suivante :

$$P = \frac{3}{2} \cdot \left( V_d \cdot I_d + V_q \cdot I_q \right) \qquad (\text{Eq. 1})$$

avec P : la puissance électrique du moteur.

On estime ensuite les pertes de l'onduleur de tension comme la somme des pertes par commutation et par conduction à partir des courants de phase, de la tension de bus continu et du facteur de modulation de l'onduleur.

Le procédé se poursuit par le calcul de la puissance électrique totale issue de la sommation de la puissance électrique du moteur et des pertes de l'onduleur.

On détermine ensuite la différence entre la puissance électrique totale et la puissance du bus 6 à haute tension continue. La différence de puissance est ensuite divisée par la mesure de vitesse de rotation du moteur. Le résultat représente la consigne de correction dynamique d'ondulation de couple qui doit être soustraite de la consigne de couple statique issue du calculateur de véhicule électrique 12 (EVC).

Le procédé se répète à une fréquence égale à celle des boucles de régulation du contrôle moteur, soit environ 10kHz.

On notera que la mesure de la tension du bus 6 à haute tension continue, l'estimation des tensions statoriques du moteur dans le repère tournant, les mesures des courants de phase du moteur et la mesure de vitesse de rotation du moteur peuvent être déterminées dans d'autres procédés participant à la commande du moteur électrique 1, notamment les procédés responsables des boucles de régulation du moteur.

La figure 5 illustre les principaux éléments d'un système de commande dynamique 14 selon un premier mode de réalisation. Le système de commande dynamique 14 comprend un premier multiplicateur 16 recevant en entrée des signaux correspondant à la mesure de courant du bus 6 à haute tension continue par la connexion 17 et des signaux correspondant à la mesure de tension du bus 6 à haute tension continue par la connexion 18. Le premier multiplicateur émet en sortie par la connexion 19 un signal correspondant à la puissance du bus 6 à haute tension continue.

Le système de commande dynamique 14 comprend également un premier sommateur 20 recevant en entrée un signal correspondant à la puissance du moteur électrique par la connexion 21 et un signal correspondant aux pertes de l'onduleur de tension par la connexion 22. Le premier sommateur émet en sortie un signal correspondant à la puissance électrique totale par la connexion 23.

Un deuxième sommateur 24 reçoit sur ses entrées les signaux portés par la connexion 19 et la connexion 23. Le deuxième sommateur 24 émet en sortie par la connexion 25 un signal correspondant à la différence entre la puissance du bus 6 à haute tension continue et la puissance électrique totale. Un second multiplicateur 26 reçoit en entrée le signal émis par le deuxième sommateur par la connexion 25 ainsi qu'un signal relatif à la vitesse de rotation du moteur par la connexion 27. Le deuxième multiplicateur 26 émet en sortie par la connexion 28 un signal de correction de consigne dynamique d'ondulation de couple correspondant au rapport de la différence de puissance émise par le deuxième sommateur divisée par la vitesse de rotation du moteur.

Le signal de correction de consigne dynamique d'ondulation de couple est alors prise en compte par le sommateur 15 précédemment décrit afin de corriger la consigne de couple reçue du calculateur de véhicule électrique 12, le signal corrigé étant émis à destination de la cartographie 9.

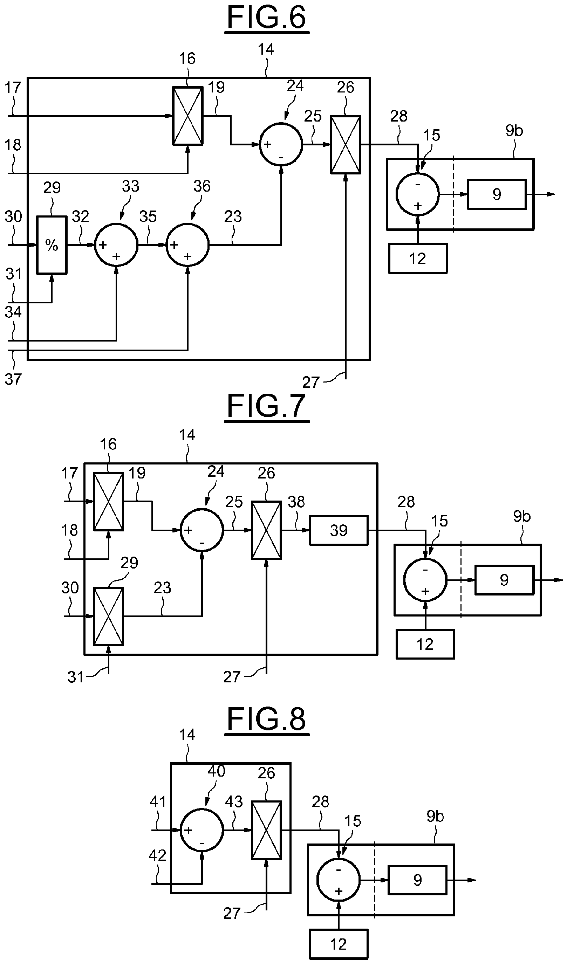

La figure 6 illustre les principaux éléments d'un système de commande dynamique 14 selon un deuxième mode de réalisation dans lequel on remplace la détermination de la puissance électrique totale par la puissance électrique requise en fonction notamment de la consigne de couple.

Ce deuxième mode de réalisation présente l'avantage d'une estimation de puissance électrique plus stable.

Un premier diviseur 29 reçoit en entrée la vitesse de rotation du moteur par la connexion 31 et la consigne de couple par la connexion 30. Le premier diviseur 29 émet en sortie par la connexion 32 un signal de puissance mécanique estimée correspondant au rapport entre la consigne de couple et la vitesse de rotation.

Un quatrième sommateur 33 reçoit en entrée le signal issu du premier diviseur 29 par la connexion 32 ainsi qu'un signal correspondant aux pertes électriques du moteur par la connexion 34.

Le signal issu du quatrième sommateur 33 par la connexion 35 correspondant à la somme de la puissance mécanique estimée et des pertes électriques du moteur par la connexion est additionné par le cinquième sommateur 36 aux pertes de l'onduleur de tension reçues par la connexion 37. Les pertes électriques du moteur sont des pertes par effet Joule. Le cinquième sommateur 36 émet en sortie un signal correspondant à la puissance électrique requise. La puissance électrique requise est substituée à la puissance électrique totale reçue par le deuxième sommateur 24 par la connexion 23 dans la description de la figure 5.

La figure 7 illustre les principaux éléments d'un autre mode réalisation du système de commande dynamique 14.

Ce mode de réalisation présente une stabilité améliorée par rapport au mode de réalisation précédent, notamment grâce à une boucle de puissance plus facile à régler et à un filtre passe haut permettant de ne sélectionner que la partie dynamique utile. Le filtre passe haut permet de ne pas introduire d'éventuelles erreurs statiques dans l'obtention du couple mécanique requis pour la boucle principale.

Un premier diviseur 29 reçoit en entrée la vitesse de rotation du moteur par la connexion 31 et la consigne de couple par la connexion 30. Le premier diviseur 29 émet en sortie par la connexion 23 un signal de puissance mécanique estimée correspondant au rapport entre la consigne de couple et la vitesse de rotation.

La puissance mécanique estimée est substituée à la puissance électrique totale reçue par le deuxième sommateur 24 par la connexion 23 dans la description de la figure 5.

Par ailleurs, le signal en sortie du second multiplicateur 26 est reçu par une connexion 38 par un filtre passe haut 39, un signal filtré correspondant étant alors émis par la connexion 28 à destination du sommateur 15 décrit en regard de la figure 5. Le signal filtré est donc utilisé comme correction de consigne dynamique d'ondulation de couple.

La figure 8 illustre les principaux éléments d'une autre alternative de réalisation du système de commande dynamique 14.

Ce mode de réalisation est plus direct que les précédents dans la méthode de diminution des ondulations de couple puisqu'il consiste à faire une correction dynamique de consigne de couple sans passer par une boucle de puissance sur le bus continu. Il est basé sur un estimateur de couple dynamique basé sur la connaissance des harmoniques de tension induites du rotor vers le stator qui sont sources d'ondulations de couple. Ce mode est donc plus direct et plus facile à régler.

Un huitième sommateur 40 reçoit en entrée une consigne de couple par la connexion 41 et une estimation dynamique du couple par la connexion 42. Le huitième sommateur 40 émet en sortie par la connexion 43 un signal de consigne de couple dynamique correspondant à la différence entre l'estimation dynamique du couple et la consigne de couple.

Un second multiplicateur 26 reçoit en entrée le signal émis par le huitième sommateur 40 par la connexion 43 ainsi qu'un signal relatif à la vitesse de rotation du moteur par la connexion 27. Le deuxième multiplicateur 26 émet en sortie par la connexion 28 un signal de correction de consigne dynamique d'ondulation de couple correspondant au rapport de la différence entre l'estimation dynamique du couple et la consigne de couple émise par le huitième sommateur 40 divisée par la vitesse de rotation du moteur.

Le signal de correction de consigne dynamique d'ondulation de couple est alors prise en compte par le sommateur 15 précédemment décrit afin de corriger la consigne de couple reçue du calculateur de véhicule électrique 12, le signal corrigé étant émis à destination de la cartographie 9.

Un cinquième mode de réalisation est illustré sur la figure 9. Ce mode de réalisation est proche du premier mode de réalisation illustré sur la figure 5.

Ces deux modes de réalisations partagent les mêmes premier multiplicateur 16, premier sommateur 20, deuxième sommateur 24 et second multiplicateur 26.

En particulier, le système de commande dynamique 14 comprend un premier multiplicateur 16 recevant en entrée des signaux correspondant à la mesure de courant du bus 6 à haute tension continue par la connexion 17 et des signaux correspondant à la mesure de tension du bus 6 à haute tension continue par la connexion 18. Le premier multiplicateur émet en sortie par la connexion 19 un signal correspondant à la puissance du bus 6 à haute tension continue.

Le système de commande dynamique 14 comprend également un premier sommateur 20 recevant en entrée un signal correspondant à la puissance du moteur électrique par la connexion 21 et un signal correspondant aux pertes de l'onduleur de tension par la connexion 22. Le premier sommateur émet en sortie un signal correspondant à la puissance électrique totale par la connexion 23.

Un deuxième sommateur 24 reçoit sur ses entrées les signaux portés par la connexion 19 et la connexion 23. Le deuxième sommateur 24 émet en sortie par la connexion 25 un signal correspondant à la différence entre la puissance du bus 6 à haute tension continue et la puissance électrique totale. Un second multiplicateur 26 reçoit en entrée le signal émis par le deuxième sommateur par la connexion 25 ainsi qu'un signal relatif à la vitesse de rotation du moteur par la connexion 27. Le deuxième multiplicateur 26 émet en sortie par la connexion 28 un signal de correction de consigne dynamique d'ondulation de couple correspondant au rapport de la différence de puissance émise par le deuxième sommateur divisée par la vitesse de rotation du moteur.

Toutefois, la structure du moyen de détermination 9b de consignes d'alimentation du moteur illustré par la figure 9 est différente de celle illustrée par la figure 5. Le moyen de détermination 9b comprend un deuxième diviseur 44 connecté en sortie du second multiplicateur 26 par la connexion 28. Le deuxième diviseur 44 est également connecté en entrée au calculateur de véhicule électrique 12 par une connexion 45. Le deuxième diviseur 44 émet en sortie un signal correspondant au rapport du signal reçu du second multiplicateur 26 par le signal du calculateur de véhicule électrique 12. Le deuxième diviseur 44 est relié en sortie par une connexion 46 à un neuvième sommateur 47. Le neuvième sommateur 47 est connecté à une mémoire 48 par une connexion 49. La mémoire 48 comprend la valeur 1. Le neuvième sommateur 47 est relié en sortie par la connexion 50 à un amplificateur 51 réalisant la multiplication du signal issu du neuvième sommateur 47 par une valeur K. Les gains optimaux des filtres de Kalman sont obtenus de façon connue de l'Homme du métier. L'amplificateur 51 est relié en sortie par la connexion 52 à un troisième multiplicateur 53. Parallèlement la cartographie 9 est reliée en entrée à une dérivation 54 de la connexion 45. La cartographie 9 est reliée en sortie par la connexion 55 au troisième multiplicateur 53. Le troisième multiplicateur 53 est relié en sortie par la connexion 56 à un moyen de contrôle du moteur électrique 13.

Les éléments communs avec le premier mode de réalisation permettent de déterminer un signal de correction de consigne dynamique d'ondulation. Le signal de correction de consigne dynamique d'ondulation est divisé par la consigne de couple par le deuxième diviseur 44. Un facteur de correction d'ondulation de couple est émis en sortie du deuxième diviseur 44, qui est ensuite modulé par un facteur K dépendant de l'amplitude de la correction souhaitée. Le facteur de correction d'ondulation de couple modulé est ensuite multiplié à une consigne de courant du stator $I_q$, le résultat étant émis à destination du moyen de contrôle du moteur électrique.

Alternativement, le facteur de correction d'ondulation de couple peut être appliqué sur une consigne de tension du stator $V_q$. Pour cela le facteur de correction d'ondulation de couple modulé est multiplié à la consigne de tension du stator $V_q$, le résultat étant émis à destination du moyen de contrôle du moteur électrique.

Cette alternative présente l'avantage d'une rapidité accrue par rapport à la modulation de la consigne de courant.

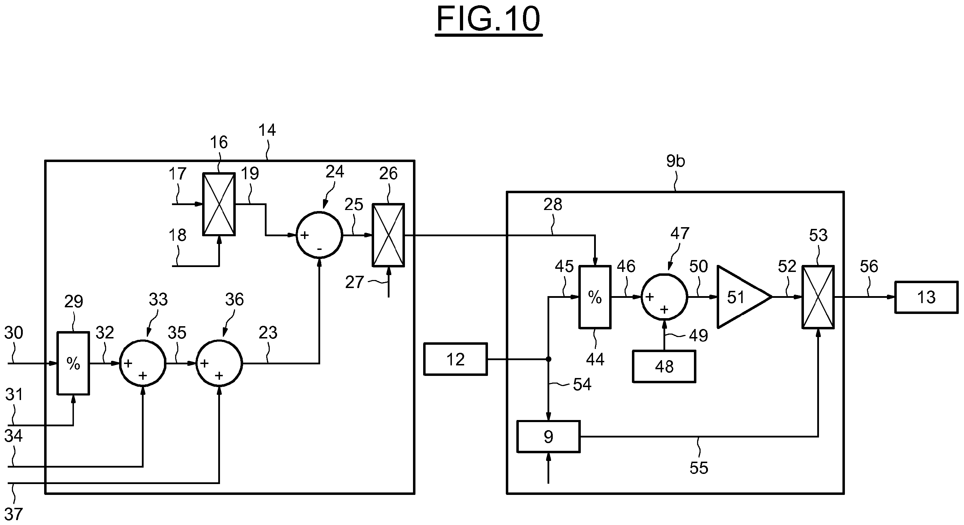

Un sixième mode de réalisation est illustré par la figure 10. Le sixième mode partage les premier multiplicateur 16, premier sommateur 20, deuxième sommateur 24, second multiplicateur 26, premier diviseur 29, quatrième sommateur 33, cinquième sommateur 36 avec le deuxième mode de réalisation illustré par la figure 6. Le sixième mode partage les deuxième diviseur 44, neuvième sommateur 47, mémoire 48, amplificateur 51 et troisième multiplicateur 53 avec le cinquième mode de réalisation illustré par la figure 9.

Un premier diviseur 29 reçoit en entrée la vitesse de rotation du moteur par la connexion 31 et la consigne de couple par la connexion 30. Le premier diviseur 29 émet en sortie par la connexion 32 un signal de puissance mécanique estimée correspondant au rapport entre la consigne de couple et la vitesse de rotation.

Un quatrième sommateur 33 reçoit en entrée le signal issu du premier diviseur 29 par la connexion 32 ainsi qu'un signal correspondant aux pertes électriques du moteur par la connexion 34.

Le signal issu du quatrième sommateur 33 par la connexion 35 correspondant à la somme de la puissance mécanique estimée et des pertes électriques du moteur par la connexion est additionné par le cinquième sommateur 36 aux pertes de l'onduleur de tension reçues par la connexion 37. Les pertes électriques du moteur sont des pertes par effet Joule. Le cinquième sommateur 36 émet en sortie un signal correspondant à la puissance électrique requise par la connexion 23.

Un premier multiplicateur 16 reçoit en entrée des signaux correspondant à la mesure de courant du bus 6 à haute tension continue par la connexion 17 et des signaux correspondant à la mesure de tension du bus 6 à haute tension continue par la connexion 18. Le premier multiplicateur émet en sortie par la connexion 19 un signal correspondant à la puissance du bus 6 à haute tension continue.

Un deuxième sommateur 24 reçoit sur ses entrées les signaux portés par la connexion 19 et la connexion 23. Le deuxième sommateur 24 émet en sortie par la connexion 25 un signal correspondant à la différence entre la puissance du bus 6 à haute tension continue et la puissance électrique totale. Un second multiplicateur 26 reçoit en entrée le signal émis par le deuxième sommateur par la connexion 25 ainsi qu'un signal relatif à la vitesse de rotation du moteur par la connexion 27. Le deuxième multiplicateur 26 émet en sortie par la connexion 28 un signal de correction de consigne dynamique d'ondulation de couple correspondant au rapport de la différence de puissance émise par le deuxième sommateur divisée par la vitesse de rotation du moteur.

Toutefois, la structure du moyen de détermination 9b de consignes d'alimentation du moteur illustré par la figure 10 est différente de celle illustrée par la figure 5. Le moyen de détermination 9b comprend un deuxième diviseur 44 connecté en sortie du second multiplicateur 26 par la connexion 28. Le deuxième diviseur 44 est également connecté en entrée au calculateur de véhicule électrique 12 par une connexion 45. Le deuxième diviseur 44 émet en sortie un signal correspondant au rapport du signal reçu du second multiplicateur 26 par le signal du calculateur de véhicule électrique 12. Le deuxième diviseur 44 est relié en sortie par une connexion 46 à un neuvième sommateur 47. Le neuvième sommateur 47 est connecté à une mémoire 48 par une connexion 49. La mémoire 48 comprend la valeur 1. Le neuvième sommateur 47 est relié en sortie par la connexion 50 à un amplificateur 51 réalisant la multiplication du signal issu du neuvième sommateur 47 par une valeur K. Les gains optimaux des filtres de Kalman sont obtenus de façon connue de l'Homme du métier. L'amplificateur 51 est relié en sortie par la connexion 52 à un troisième multiplicateur 53. Parallèlement la cartographie 9 est reliée en entrée à une dérivation 54 de la connexion 45. La cartographie 9 est reliée en sortie par la connexion 55 au troisième multiplicateur 53. Le troisième multiplicateur 53 est relié en sortie par la connexion 56 à un moyen de contrôle du moteur électrique 13.

Le signal de correction de consigne dynamique d'ondulation porté par la connexion 28 est divisé par la consigne de couple par le deuxième diviseur 44. Un facteur de correction d'ondulation de couple est émis en sortie du deuxième diviseur 44, qui est ensuite modulé par un facteur K dépendant de l'amplitude de la correction souhaitée. Le facteur de correction d'ondulation de couple modulé est ensuite multiplié à une consigne de courant du stator $I_q$, le résultat étant émis à destination du moyen de contrôle du moteur électrique.

Ce mode de réalisation bénéficie ainsi des avantages de la détermination de la puissance du deuxième mode de réalisation avec la rapidité d'application de correction du cinquième mode de réalisation.

Alternativement, le facteur de correction d'ondulation de couple peut être appliqué sur une consigne de tension du stator $V_q$. Pour cela le facteur de correction d'ondulation de couple modulé est multiplié à la consigne de tension du stator $V_q$, le résultat étant émis à destination du moyen de contrôle du moteur électrique.

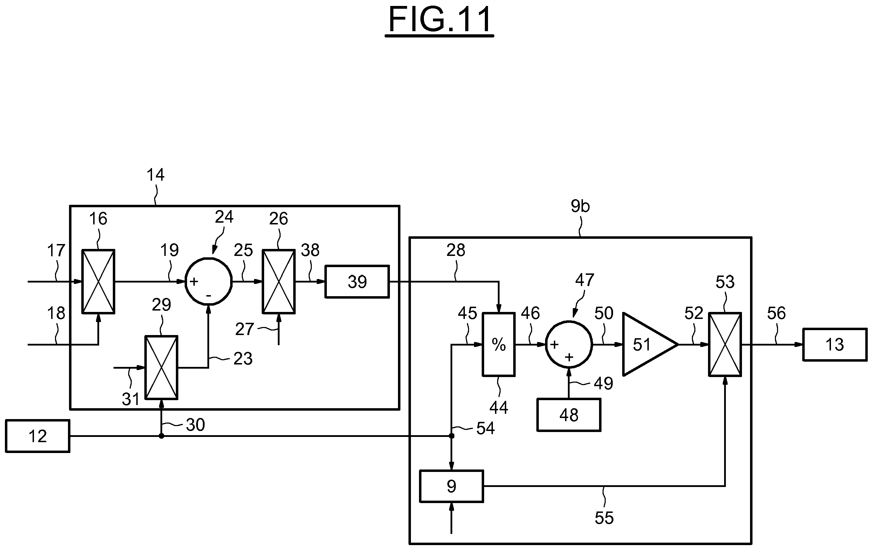

Un septième mode de réalisation est illustré sur la figure 11.

Le septième mode de réalisation partage les premier diviseur 29, deuxième sommateur 24 et le premier multiplicateur 16 avec le troisième mode illustré par la figure 7. Le septième mode partage les deuxième diviseur 44, neuvième sommateur 47, mémoire 48, amplificateur 51 et troisième multiplicateur 53 avec le cinquième mode de réalisation illustré par la figure 9.

Un premier diviseur 29 reçoit en entrée la vitesse de rotation du moteur par la connexion 31 et la consigne de couple par la connexion 30. Le premier diviseur 29 émet en sortie par la connexion 23 un signal de puissance mécanique estimée correspondant au rapport entre la consigne de couple et la vitesse de rotation.

La puissance mécanique estimée est substituée à la puissance électrique totale reçue par le deuxième sommateur 24 par la connexion 23 dans la description de la figure 5.

Par ailleurs, le signal en sortie du second multiplicateur 26 est reçu par une connexion 38 par un filtre passe haut 39, un signal filtré correspondant étant alors émis par la connexion 28.

Comme pour les modes de réalisation illustrés sur les figures 9 et 10, la structure du moyen de détermination 9b de consignes d'alimentation du moteur illustré par la figure 11 est différente de celle illustrée par la figure 5. Le moyen de détermination 9b comprend Un deuxième diviseur 44 connecté en sortie du filtre passe haut 39 par la connexion 28. Le deuxième diviseur 44 est également connecté en entrée au calculateur de véhicule électrique 12 par une connexion 45. Le deuxième diviseur 44 émet en sortie un signal correspondant au rapport du signal reçu du second multiplicateur 26 par le signal du calculateur de véhicule électrique 12. Le deuxième diviseur 44 est relié en sortie par une connexion 46 à un neuvième sommateur 47. Le neuvième sommateur 47 est connecté à une mémoire 48 par une connexion 49. La mémoire 48 comprend la valeur 1. Le neuvième sommateur 47 est relié en sortie par la connexion 50 à un amplificateur 51 réalisant la multiplication du signal issu du neuvième sommateur 47 par une valeur K. Les gains optimaux des filtres de Kalman sont obtenus de façon connue de l'Homme du métier. L'amplificateur 51 est relié en sortie par la connexion 52 à un troisième multiplicateur 53. Parallèlement la cartographie 9 est reliée en entrée à une dérivation 54 de la connexion 45. La cartographie 9 est reliée en sortie par la connexion 55 au troisième multiplicateur 53. Le troisième multiplicateur 53 est relié en sortie par la connexion 56 à un moyen de contrôle du moteur électrique 13.

Le signal de correction de consigne dynamique d'ondulation porté par la connexion 28 est divisé par la consigne de couple par le deuxième diviseur 44. Un facteur de correction d'ondulation de couple est émis en sortie du deuxième diviseur 44, qui est ensuite modulé par un facteur K dépendant de l'amplitude de la correction souhaitée. Le facteur de correction d'ondulation de couple modulé est ensuite multiplié à une consigne de courant du stator $I_q$, le résultat étant émis à destination du moyen de contrôle du moteur électrique.

Le septième mode de réalisation bénéficie donc des avantages des troisième et cinquième modes de réalisation.

Alternativement, le facteur de correction d'ondulation de couple peut être appliqué sur une consigne de tension du stator $V_q$. Pour cela le facteur de correction d'ondulation de couple modulé est multiplié à la consigne de tension du stator $V_q$, le résultat étant émis à destination du moyen de contrôle du moteur électrique.

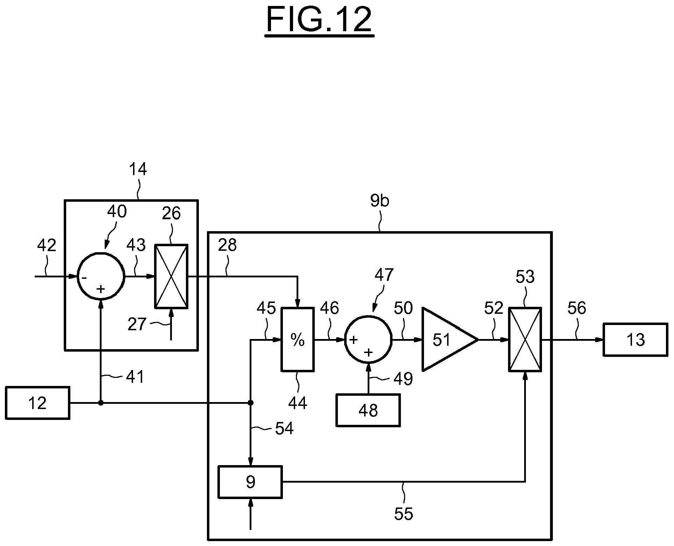

Un huitième mode de réalisation est illustré sur la figure 12.

Le huitième mode de réalisation partage le huitième sommateur 40 et le second multiplicateur 26 avec le quatrième mode illustré par la figure 8. Le huitième mode partage les deuxième diviseur 44, neuvième sommateur 47, mémoire 48, amplificateur 51 et troisième multiplicateur 53 avec le cinquième mode de réalisation illustré par la figure 9.

Un huitième sommateur 40 reçoit en entrée une consigne de couple par la connexion 41 et une estimation dynamique du couple par la connexion 42. Le huitième sommateur 40 émet en sortie par la connexion 43 un signal de consigne de couple dynamique correspondant à la différence entre l'estimation dynamique du couple et la consigne de couple.

Un second multiplicateur 26 reçoit en entrée le signal émis par le huitième sommateur 40 par la connexion 43 ainsi qu'un signal relatif à la vitesse de rotation du moteur par la connexion 27. Le deuxième multiplicateur 26 émet en sortie par la connexion 28 un signal de correction de consigne dynamique d'ondulation de couple correspondant au rapport de la différence entre l'estimation dynamique du couple et la consigne de couple émise par le huitième sommateur 40 divisée par la vitesse de rotation du moteur.

Comme pour les modes de réalisation illustrés sur les figures 9 à 11, la structure du moyen de détermination 9b de consignes d'alimentation du moteur illustré par la figure 12 est différente de celle illustrée par la figure 5. Le moyen de détermination 9b comprend un deuxième diviseur 44 connecté en sortie du second multiplicateur 26 par la connexion 28. Le deuxième diviseur 44 est également connecté en entrée au calculateur de véhicule électrique 12 par une connexion 45. Le deuxième diviseur 44 émet en sortie un signal correspondant au rapport du signal reçu du second multiplicateur 26 par le signal du calculateur de véhicule électrique 12. Le deuxième diviseur 44 est relié en sortie par une connexion 46 à un neuvième sommateur 47. Le neuvième sommateur 47 est connecté à une mémoire 48 par une connexion 49. La mémoire 48 comprend la valeur 1. Le neuvième sommateur 47 est relié en sortie par la connexion 50 à un amplificateur 51 réalisant la multiplication du signal issu du neuvième sommateur 47 par une valeur K. Les gains optimaux des filtres de Kalman sont obtenus de façon connue de l'Homme du métier. L'amplificateur 51 est relié en sortie par la connexion 52 à un troisième multiplicateur 53. Parallèlement la cartographie 9 est reliée en entrée à une dérivation 54 de la connexion 45. La cartographie 9 est reliée en sortie par la connexion 55 au troisième multiplicateur 53. Le troisième multiplicateur 53 est relié en sortie par la connexion 56 à un moyen de contrôle du moteur électrique 13.

Le signal de correction de consigne dynamique d'ondulation porté par la connexion 28 est divisé par la consigne de couple par le deuxième diviseur 44. Un facteur de correction d'ondulation de couple est émis en sortie du deuxième diviseur 44, qui est ensuite modulé par un facteur K dépendant de l'amplitude de la correction souhaitée. Le facteur de correction d'ondulation de couple modulé est ensuite multiplié à une consigne de courant du stator $I_q$, le résultat étant émis à destination du moyen de contrôle du moteur électrique.

Le huitième mode de réalisation bénéficie donc des avantages des quatrième et cinquième modes de réalisation.

Alternativement, le facteur de correction d'ondulation de couple peut être appliqué sur une consigne de tension du stator $V_q$. Pour cela le facteur de correction d'ondulation de couple modulé est multiplié à la consigne de tension du stator $V_q$, le résultat étant émis à destination du moyen de contrôle du moteur électrique.

Les différents modes de réalisation du système de commande dynamique permettent de limiter les ondulations de couple par application d'une correction estimée dynamiquement.

## Revendications

1. Système de commande d'un moteur électrique (1) à phases multiples équipant un véhicule automobile comprenant un rotor (2) alimenté par un hacheur de tension (4) ou un rotor à aimants permanents et un stator (3) alimenté par un onduleur de tension (5) à phases multiples, le hacheur de tension (4) et l'onduleur de tension (5) à phases multiples étant alimentés par un bus (6) à haute tension continue, le système de commande recevant en entrée une consigne de couple d'un calculateur de véhicule électrique (12),
   **caractérisé par le fait qu'**il comprend un système de commande dynamique (14) de la consigne de couple apte à déterminer une consigne de correction dynamique d'ondulation de couple fonction de la puissance mécanique estimée ou puissance électrique du moteur électrique, de la puissance du bus (6) à haute tension continue et d'une mesure de vitesse de rotation du moteur, et
   un moyen de détermination (9b) de consignes d'alimentation du moteur électrique comprenant des moyens de correction d'une consigne de couple en fonction de la consigne de couple et de la consigne de correction dynamique d'ondulation de couple, et une table de conversion (9) apte à déterminer des consignes d'alimentation du moteur en fonction de la consigne de couple corrigée.

2. Système selon la revendication 1, dans lequel le système de commande dynamique (14) de la consigne de couple comprend des moyens aptes à déterminer le produit entre la tension et le courant du bus (6) à haute tension continue reçus en entrée.

3. Système selon l'une quelconque des revendications précédentes, dans lequel le système de commande dynamique (14) de la consigne de couple comprend des moyens aptes à déterminer le produit de la vitesse du véhicule et de la consigne de couple reçues en entrée.

4. Système selon l'une quelconque des revendications précédentes, dans lequel le système de commande dynamique (14) de la consigne de couple reçoit en entrée une valeur des pertes électriques au niveau du moteur.

5. Système selon l'une quelconque des revendications précédentes, dans lequel le système de commande dynamique (14) de la consigne de couple reçoit en entrée une valeur des pertes électriques au niveau du hacheur de tension (4) et de l'onduleur de tension à phases multiples, le hacheur de tension (4) étant alimenté par le bus (6) à haute tension continue.

6. Système selon la revendication 5, dans lequel le système de commande dynamique (14) de la consigne de couple comprend des moyens aptes à déterminer la somme de la puissance du moteur électrique (1) et des pertes électriques au niveau du hacheur de tension (4) et de l'onduleur de tension à phases multiples reçues en entrée.

7. Système selon l'une quelconque des revendications précédentes, dans lequel le système de commande dynamique

(14) de la consigne de couple comprend un filtre passe haut.

**8.** Système selon l'une quelconque des revendications précédentes, dans lequel le système de commande dynamique (14) de la consigne de couple reçoit en entrée une estimation dynamique du couple et un couple de référence.

**9.** Procédé de commande d'un moteur électrique (1) à phases multiples équipant un véhicule automobile comprenant un rotor (2) alimenté par un hacheur de tension (4) ou un rotor à aimants permanents et un stator (3) alimenté par un onduleur de tension (5) à phases multiples, le hacheur de tension (4) et l'onduleur de tension (5) à phases multiples étant alimentés par un bus (6) à haute tension continue, l'alimentation du moteur étant déterminée en fonction de la consigne de couple dépendant de la requête du conducteur,
**caractérisé par le fait qu'**il comprend une détermination d'une consigne de correction dynamique d'ondulation de couple fonction de la puissance mécanique estimée ou puissance électrique du moteur électrique, de la puissance du bus (6) à haute tension continue et d'une mesure de vitesse de rotation du moteur, et une détermination de consignes d'alimentation du moteur dépendant de la consigne de correction dynamique d'ondulation de couple et de la consigne de couple, la détermination de consignes d'alimentation du moteur comprenant une correction d'une consigne de couple en fonction de la consigne de couple et de la consigne de correction dynamique d'ondulation de couple, et une détermination des consignes d'alimentation du moteur issues d'une cartographie en fonction de la consigne de couple corrigée.

**Patentansprüche**

**1.** System zur Steuerung eines mehrphasigen Elektromotors (1), der in ein Kraftfahrzeug eingebaut ist, umfassend einen Rotor (2), der von einem Spannungszerhacker (4) gespeist wird, oder einen Rotor mit Dauermagneten und einem Stator (3), der von einem mehrphasigen Spannungswechselrichter (5) gespeist wird, wobei der Spannungszerhacker (4) und der mehrphasige Spannungswechselrichter (5) von einem Bus (6) hoher Gleichspannung gespeist werden, wobei das System zur Steuerung am Eingang einen Drehmoment-Vorgabewert von einem Rechner eines Elektrofahrzeugs (12) empfängt, **dadurch gekennzeichnet, dass** es ein System zur dynamischen Steuerung (14) des Drehmoment-Vorgabewerts umfasst, das geeignet ist, einen Vorgabewert zur dynamischen Korrektur einer Drehmomentwelligkeit zu bestimmen, die von der geschätzten mechanischen Leistung oder der elektrischen Leistung des Elektromotors, der Leistung des Busses (6) hoher Gleichspannung und einer Messung einer Drehzahl des Motors abhängig ist, und
ein Mittel zur Bestimmung (9b) von Vorgabewerten zur Versorgung des Elektromotors umfassend Mittel zur Korrektur eines Drehmoment-Vorgabewerts in Abhängigkeit von dem Drehmoment-Vorgabewert und dem Vorgabewert zur dynamischen Korrektur einer Drehmomentwelligkeit, und eine Umwandlungstabelle (9), die geeignet ist, Vorgabewerte zur Versorgung des Motors in Abhängigkeit von dem korrigierten Drehmoment-Vorgabewert zu bestimmen.

**2.** System nach Anspruch 1, wobei das System zur dynamischen Steuerung (14) des Drehmoment-Vorgabewerts Mittel umfasst, die geeignet sind, das Produkt zwischen der Spannung und dem Strom des Busses (6) hoher Gleichspannung zu bestimmen, die am Eingang empfangen werden.

**3.** System nach einem der vorhergehenden Ansprüche, wobei das System zur dynamischen Steuerung (14) des Drehmoment-Vorgabewerts Mittel umfasst, die geeignet sind, das Produkt der Geschwindigkeit des Fahrzeugs und des Drehmoment-Vorgabewerts zu bestimmen, die am Eingang empfangen werden.

**4.** System nach einem der vorhergehenden Ansprüche, wobei das System zur dynamischen Steuerung (14) des Drehmoment-Vorgabewerts am Eingang einen Wert der elektrischen Verluste am Motor empfängt.

**5.** System nach einem der vorhergehenden Ansprüche, wobei das System zur dynamischen Steuerung (14) des Drehmoment-Vorgabewerts am Eingang einen Wert der elektrischen Verluste an dem Spannungszerhacker (4) und dem mehrphasigen Spannungswechselrichter empfängt, wobei der Spannungszerhacker (4) von dem Bus (6) hoher Gleichspannung gespeist wird.

**6.** System nach Anspruch 5, wobei das System zur dynamischen Steuerung (14) des Drehmoment-Vorgabewerts Mittel umfasst, die geeignet sind, die Summe der Leistung des Elektromotors (1) und der elektrischen Verluste an dem Spannungszerhacker (4) und dem mehrphasigen Spannungswechselrichter zu bestimmen, die am Eingang empfangen werden.

7. System nach einem der vorhergehenden Ansprüche, wobei das System zur dynamischen Steuerung (14) des Drehmoment-Vorgabewerts einen Hochpassfilter umfasst.

8. System nach einem der vorhergehenden Ansprüche, wobei das System zur dynamischen Steuerung (14) des Drehmoment-Vorgabewerts am Eingang eine dynamische Schätzung des Drehmoments und ein Bezugsdrehmoment empfängt.

9. Verfahren zur Steuerung eines mehrphasigen Elektromotors (1), der in ein Kraftfahrzeug eingebaut ist, umfassend einen Rotor (2), der von einem Spannungszerhacker (4) gespeist wird, oder einen Rotor mit Dauermagneten und einem Stator (3), der von einem mehrphasigen Spannungswechselrichter (5) gespeist wird, wobei der Spannungszerhacker (4) und der mehrphasige Spannungswechselrichter (5) von einem Bus (6) hoher Gleichspannung gespeist werden, wobei die Versorgung des Motors in Abhängigkeit von dem Drehmoment-Vorgabewert bestimmt wird, der von der Anforderung des Fahrers abhängt,
**dadurch gekennzeichnet, dass** es eine Bestimmung eines Vorgabewerts zur dynamischen Korrektur einer Drehmomentwelligkeit umfasst, die von der geschätzten mechanischen Leistung oder der elektrischen Leistung des Elektromotors, der Leistung des Busses (6) hoher Gleichspannung und einer Messung einer Drehzahl des Motors abhängig ist, und eine Bestimmung von Vorgabewerten zur Versorgung des Motors, die von dem Vorgabewert zur dynamischen Korrektur einer Drehmomentwelligkeit und des Drehmoment-Vorgabewerts abhängig ist, die Bestimmung von Vorgabewerten zur Versorgung des Motors umfassend eine Korrektur eines Drehmoment-Vorgabewerts in Abhängigkeit von dem Drehmoment-Vorgabewert und dem Vorgabewert zur dynamischen Korrektur einer Drehmomentwelligkeit, und eine Bestimmung der Vorgabewerte zur Versorgung des Motors, die aus einer Kartografie in Abhängigkeit von dem korrigierten Drehmoment-Vorgabewert hervorgehen.

**Claims**

1. System for controlling a multiphase electric motor (1) fitted to a motor vehicle, said motor comprising a rotor (2) powered by a voltage chopper (4) or a rotor with permanent magnets and a stator (3) powered by a multiphase voltage inverter (5), the voltage chopper (4) and the multiphase voltage inverter (5) being powered via a high-voltage DC bus (6), the control system receiving as an input a torque setpoint of an electric-vehicle computer (12), **characterized in that** it comprises a system (14) for the dynamic control of the torque setpoint, capable of determining a dynamic correction setpoint of torque ripple as a function of the estimated mechanical power or electric power of the electric motor, of the power of the high-voltage DC bus (6) and of a measurement of the rotational speed of the motor, and
a means (9b) for determining setpoints for powering the electric motor comprising means for correcting a torque setpoint as a function of the torque setpoint and of the dynamic correction setpoint of torque ripple, and a conversion table (9) capable of determining setpoints for powering the motor as a function of the corrected torque setpoint.

2. System according to Claim 1, wherein the system (14) for the dynamic control of the torque setpoint comprises means capable of determining the product between the voltage and the current of the high-voltage DC bus (6) received as inputs.

3. System according to either one of the preceding claims, wherein the system (14) for the dynamic control of the torque setpoint comprises means capable of determining the product of the vehicle speed and of the torque setpoint received as inputs.

4. System according to any one of the preceding claims, wherein the system (14) for the dynamic control of the torque setpoint receives as input a value of the electric losses at the motor.

5. System according to any one of the preceding claims, wherein the system (14) for the dynamic control of the torque setpoint receives as input a value of the electric losses at the voltage chopper (4) and the multiphase voltage inverter, the voltage chopper (4) being powered via the high-voltage DC bus (6).

6. System according to Claim 5, wherein the system (14) for the dynamic control of the torque setpoint comprises means capable of determining the sum of the power of the electric motor (1) and of the electric losses at the voltage chopper (4) and the multiphase voltage inverter received as inputs.

7. System according to any one of the preceding claims, wherein the system (14) for the dynamic control of the torque setpoint comprises a high-pass filter.

8. System according to any one of the preceding claims, wherein the system (14) for the dynamic control of the torque setpoint receives as input a dynamic estimate of the torque and a reference torque.

9. Method for controlling a multiphase electric motor (1) fitted to a motor vehicle, said motor comprising a rotor (2) powered by a voltage chopper (4) or a rotor with permanent magnets and a stator (3) powered by a multiphase voltage inverter (5), the voltage chopper (4) and the multiphase voltage inverter (5) being powered via a high-voltage DC bus (6), the powering of the motor being determined as a function of the torque setpoint dependent on the request of the driver,
**characterized in that** it comprises a determination of a dynamic correction setpoint of torque ripple as a function of the estimated mechanical power or electric power of the electric motor, of the power of the high-voltage DC bus (6) and of a measurement of the rotational speed of the motor, and a determination of setpoints for powering the motor dependent on the dynamic correction setpoint of torque ripple and of the torque setpoint, the determination of setpoints for powering the motor comprising a correction of a torque setpoint as a function of the torque setpoint and of the dynamic correction setpoint of torque ripple, and a determination of the setpoints for powering the motor originating from a map as a function of the corrected torque setpoint.

# FIG.1

# FIG.2

# FIG.3

## FIG.4

## FIG.5

# FIG.6

# FIG.7

# FIG.8

# FIG.9

EP 2 692 055 B1

# FIG.10

EP 2 692 055 B1

FIG.11

# FIG.12

EP 2 692 055 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2869478
- EP 1906523 A
- JP 2002223582 A
- US 20030030404 A